**Europäisches Patentamt**

**European Patent Office**

**Office européen des brevets**

(11) Veröffentlichungsnummer: **0 184 691**
A2

# EUROPÄISCHE PATENTANMELDUNG

(21) Anmeldenummer: 85114689.4

(22) Anmeldetag: 19.11.85

(51) Int. Cl.⁴: **B 01 D 19/00**

(30) Priorität: 11.12.84 DE 3445052

(43) Veröffentlichungstag der Anmeldung: 18.06.86
Patentblatt 86/25

(84) Benannte Vertragsstaaten: BE DE FR GB IT SE

(71) Anmelder: Rotorcomp Verdichter GmbH,
Wolfratshauserstrasse 34, D-8000 München 70 (DE)

(72) Erfinder: Gerdau, Alfred, Kolumbusstrasse 16,
D-8000 München 90 (DE)

(74) Vertreter: Hering, Hartmut, Dipl.-Ing., Patentanwälte Dr.
Thomson - Weinkauff - Hering P.O. Box 701929,
D-8000 München 70 (DE)

(54) **Vorrichtung zum Entgasen einer mittels eines Fluidabscheiders separierten Flüssigphase.**

(57) Die Erfindung befaßt sich mit der Entgasung einer Flüssigphase, die man beispielsweise in einem Fluidabscheider (20) nach der Separation erhält. Um diese separierte Flüssigphase weitgehendst von Gasanteilen zu befreien, ist nach der Erfindung im geschlossenen Kreislauf der Flüssigphase eine Absaugeinrichtung (30, 44, 50, 54) vorgesehen, die mit einem Sammelraum (32, 46, 55) für die zu entgasende Flüssigphase in Verbindung steht. Die Absaugeinrichtung (32, 46, 55) erzeugt hierbei einen Saugdruck, und zwar vorzugsweise unter Ausnutzung des im Kreislauf zirkulierenden Strömungsmittels, wozu beispielsweise ein vom Strömungsmittel durchströmter Ejektor (40) verwendet werden kann, und durch diesen von der Absaugeinrichtung erzeugten Saugdruck wird das Gas aus dem Sammelraum (32, 46, 55) abgeleitet. Wenn der Sammelraum (32, 46, 55) für die zu entgasende Flüssigphase im Fluidabscheider (20) im Bereich von dessen Flüssigkeitssammelraum (15) angeordnet ist, wird zur Bildung des Sammelraums (32, 46, 55) für die zu entgasende Flüssigphase vorzugsweise ein glockenförmiger oder als Hohlzylinder ausgebildeter Behälter (34) verwendet, der in die Flüssigkeit im Flüssigkeitssammelraum (15) eingetaucht ist. Zweckmäßigerweise ist auch die Absaugeinrichtung (30, 44) zur Erzeugung eines Saugdrucks im Fluidabscheider (20) angeordnet. Alternativ kann die Absaugeinrichtung (50, 54) auch außerhalb des Fluidabscheiders (15), und zwar so nahe wie möglich zum Auslaß (52, 59) des als Arbeitsmaschine dienenden Kompressors (3) gelegt werden.

Vorrichtung zum Entgasen einer mittels eines Fluidabscheiders separierten Flüssigphase

## Beschreibung

Die Erfindung betrifft eine Vorrichtung zum Entgasen einer mittels eines Fluidabscheiders separierten Flüssigphase in einem Kreislauf zwischen dem Fluidabscheider und einer Arbeitsmaschine, wie einem Verdichter. Eine solche Anordnung bezieht sich insbesondere auf eine Druckgasanlage, beispielsweise zur Erzeugung von Druckluft.

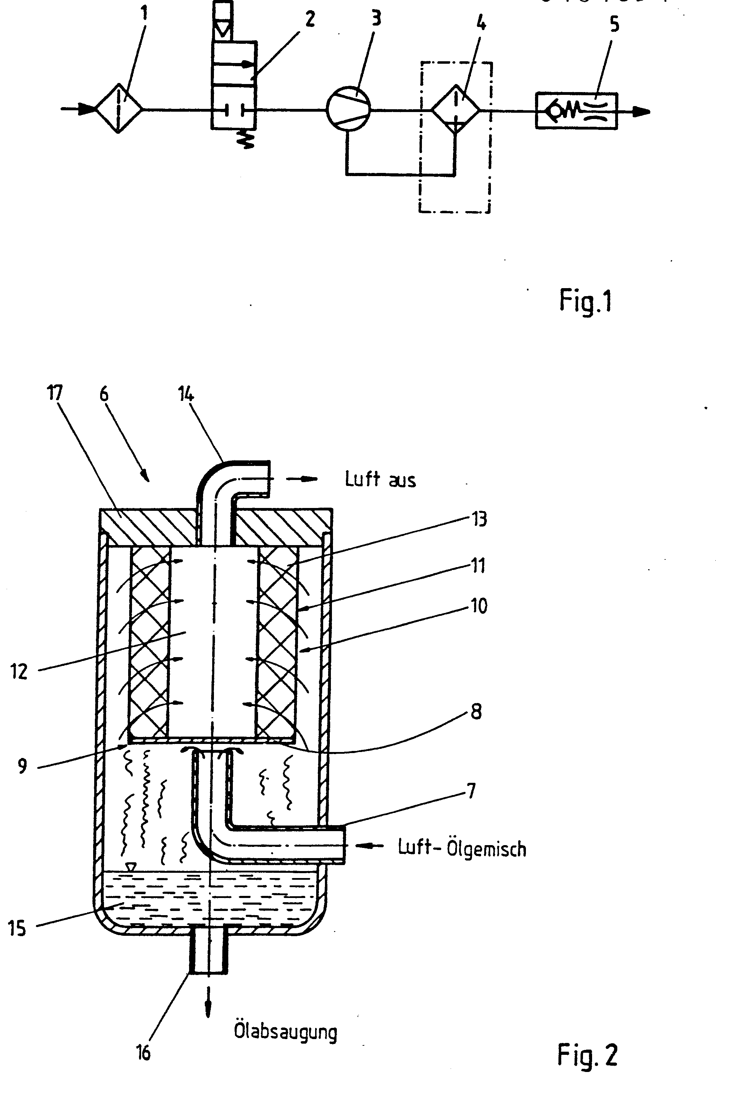

Bei einer üblichen und in Figur 1 der Zeichnung schematisch dargestellten Druckgasanlage zur Erzeugung von Druckgas beispielsweise wird bei der Kompression in einem Kompressor als Arbeitsmaschine, wie einem Schraubenkompressor, dem zu verdichtenden Medium eine Flüssigkeit, wie Öl, zur Kühlung, Schmierung und Abdichtung beigemischt, die nach der Kompression in einem Abscheidersystem vor der Lieferung des Druckgases an den Verbraucher wieder abgetrennt und im Kreislauf, gegebenenfalls unter Zwischenschaltung einer Kühleinrichtung, zur Arbeitsmaschine wieder zurückgeführt wird. Als Abscheidersystem wird üblicherweise ein Fluidabscheider, insbesondere ein Gas/Flüssigkeit-Abscheider und speziell beim vorstehend beschriebenen Beispiel ein Öl/Luft-Abscheider verwendet. Üblicherweise, wie auch in Figur 2 der beiliegenden Zeichnung dargestellt ist, umfaßt ein solcher Abscheider eine Grobabscheideeinrichtung und eine Feinabscheideeinrichtung. Beide sind in einem kesselartigen Abscheidergehäuse untergebracht, das vorzugsweise kreiszylindrisch ausgebildet ist. Der in den Abscheider eintretende und zu behandelnde Fluidstrom, der von einem Gemisch aus Flüssigkeit und Gas, wie Öl und Luft, gebildet wird, wird vom Kompressorausgang über einen Fluideintritt in das Gehäuse eingeleitet und auf eine Pralleinrichtung gerichtet, die eine Grobabscheideeinrichtung bildet. Der Bodenbereich des Gehäuses bildet einen Flüssigkeitssammelraum, wie einen Ölsammelraum, in dem sich die separierte Flüssigphase von der Grobabscheideeinrichtung und der in Fluidströmungsrichtung im Abscheider der Grobabscheideeinrichtung nachgeschalteten Feinabscheideeinrichtung sammelt. Die im Fluidabscheider separierte Flüssigphase enthält noch Gas, wie Luft, das in der Flüssigphase in Form von Blasen enthalten ist. Da bei solchen Anlagen die Flüssigkeit im Kreislauf zur Arbeitsmaschine, wie dem Kompressor, zurückgeführt wird, kann die Entgasung zum Entfernen des Gases aus der Flüssigphase nur im Sammelraum für die Flüssigphase erfolgen. Einen bedeutenden Einfluß auf die Entgasung hat hierbei die Verweildauer der Flüssigphase im Sammelraum. So kann man allgemein sagen, daß man eine umso größere Verweildauer der Flüssigphase im Sammelraum für eine zufriedenstellende Entgasung benötigt, je höher der Pegel der Flüssigphase im Sammelraum ist und je höher der Betriebsdruck der Anlage ist. Da aber die Flüssigkeit im Kreislauf wieder zur Arbeitsmaschine zurückgeführt wird, läßt sich die Verweildauer der Flüssigphase im Sammelraum nur innerhalb minimaler Grenzen variieren und eine längere Verweildauer läßt sich nur dann erzielen, wenn man die im Kreislauf zirkulierende Flüssigkeitsmenge, wie die Menge des Öls, insgesamt erhöht, was aber aus wirtschaftlichen Gründen unerwünscht ist.

Der in der zur Arbeitsmaschine zurückgeführten Flüssigkeit enthaltene Gasanteil hat aber einen bedeutenden Einfluß auf den Gesamtwirkungsgrad der Anlage. Mit steigendem Gasanteil in der Flüssigkeit nimmt nämlich die Abdichtungswirkung derselben in der Arbeitsmaschine ab und hiermit ist ein Energieverlust verbunden. Auch wird die Kühlwirkung der Flüssigkeit in der Arbeitsmaschine herabgesetzt, da die im Flüssigkeitskreislauf dem Fluidabscheider gegebenenfalls nachgeschaltete Kühleinrichtung weniger effektiv arbeitet und die der Arbeitsmaschine effektiv pro Zeiteinheit zugeführte Flüssigkeitsmenge um den Gasanteil dieser Flüssigkeit geringer ist. Auch kann die Flüssigkeit, wie das Öl, eine Schmierfunktion in der Arbeitsmaschine nicht mehr zufriedenstellend erfüllen, so daß auch die Dämpfungswirkung der Flüssigkeit in der Arbeitsmaschine herabgesetzt wird und die Arbeitsmaschine geräuschintensiv läuft.

Die Erfindung zielt darauf ab, eine Vorrichtung zum Entgasen einer mittels eines Fluidabscheiders separierten Flüssigphase der gattungsgemäßen Art zu schaffen, die unabhängig von der im Kreislauf umlaufenden Flüssigkeitsmenge eine verbesserte Entgasung ermöglicht, um den Gasanteil in der Flüssigphase beträchtlich zu reduzieren. Hierbei soll die Vorrichtung derart beschaffen sein, daß sie sich konstruktiv möglichst wenig aufwendig insbesondere in eine Druckgasanlage einbauen läßt. Vorzugsweise soll die Vorrichtung zum Entgasen der gattungsgemäßen Art auch derart ausgelegt sein, daß sie selbst bei einer Herabsetzung der im Kreislauf zirkulierenden Flüssigkeitsmenge eine zufriedenstellende Entgasung ohne Beeinträchtigung des Gesamtwirkungsgrades der Anlage ermöglicht.

Nach der Erfindung zeichnet sich hierzu eine Vorrichtung zum Entgasen einer mittels eines Fluidabscheiders separierten Flüssigphase in einem Kreislauf zwischen dem Fluidabscheider und einer Arbeitsmaschine, wie einem Verdichter durch die Merkmale des Anspruches 1 aus.

Bei der erfindungsgemäßen Vorrichtung zum Entgasen wird der Gasanteil der im Fluidabscheider separierten Flüssigphase beschleunigt mittels der Absaugeinrichtung reduziert, ohne daß man eine größere Verweildauer der Flüssigphase im Kreislauf benötigt. Somit wird gemäß der Lösung nach der Erfindung durch die Beschleunigung der Entgasung während der Verweildauer der Flüssigphase im Fluidabscheider eine größere Gasmenge, d.h. insbesondere eine größere Luftmenge entfernt, so daß man bei der zur Arbeitsmaschine zurückgeführten Flüssigphase einen größeren Flüssigkeitsanteil als bisher erhält. Angewandt auf das vorstehend beschriebene bevorzugte Beispiel einer Druckgasanlage wird somit die liquide Ölphase wesentlich verbessert. Durch die nach der Erfindung erzielte kompaktere Ölphase ergibt sich eine bessere Wärmeableitung in einer gegebenenfalls im Fluidabscheider nachgeschalteten Kühleinrichtung, so daß die Temperatur des Öls durch die Kühleinrichtung stärker als bisher herabgesetzt werden kann. Hierdurch wird die Kühlwirkung des zur Arbeitsmaschine zurückgeführten Öls in der Arbeitsmaschine erhöht. Gleichzeitig ermöglicht die kompaktere Ölphase einen besseren Wirkungsgrad der Arbeitsmaschine, da durch den geringeren Gasanteil der Flüssigkeit die Dichtwirkung der Flüssigkeit, wie des Öls, verbessert werden kann. Auch erreicht man darüber hinaus einen sehr geräuscharmen Lauf der Arbeitsmaschine, was insbesondere bei Rotationsverdichtern von großer Bedeutung ist, da die nach der Erfindung stärker entgaste Flüssigkeit die Dämpfwirkung in der Arbeitsmaschine erhöht.

Weitere vorteilhafte Ausgestaltungen der Erfindung sind in den Unteransprüchen wiedergegeben.

Die Ansprüche 2 bis 4 geben bevorzugte Stellen für die Anordnung der Absaugeinrichtung an. Um eine möglichst effizient arbeitende Absaugeinrichtung zu erhalten, d.h. eine solche Absaugeinrichtung zu erhalten, die eine möglichst hohe Druckdifferenz zwischen dem Systemdruck und dem Druck im Sammelraum für die zu entgasende Flüssigphase erzeugt, ist die eine Druckdifferenz erzeugende Absaugeinrichtung im Kreislauf so nahe wie möglich am Auslaß der Arbeitsmaschine angeordnet oder sie kann sogar direkt im Auslaß angeordnet sein, da in diesem Bereich die Strömungsenergie des Strömungsmittels noch am größten ist und die Leitungsverluste bedingt durch die Leitungen und die Einrichtungen im Kreislauf am geringsten sind. Um eine konstruktiv möglichst einfache Anordnung der Absaugeinrichtung zu erhalten, ist diese gemäß Anspruch 3 im Bereich des Eintritts des Fluidabscheiders angeordnet, und zwar nach Anspruch 4 in Strömungsrichtung vor der Grobabscheideeinrichtung, so daß die Absaugeinrichtung noch im Bereich des Kreislaufs mit einem möglichst hohen Strömungsenergieniveau angeordnet ist, wobei nur Leitungsverluste zwischen dem Auslaß der Arbeitsmaschine und dem Eintritt in den Fluidabscheider einen Einfluß auf die Effizienz der Absaugeinrichtung haben.

In den Ansprüchen 5 und 6 sind bevorzugte Ausbildungsformen der Absaugeinrichtung selbst angegeben, wobei sie gemäß Anspruch 5 von einem Ejektor gebildet wird oder vorzugsweise gemäß Anspruch 6 einen Venturiabschnitt enthält, die von dem im Kreislauf zirkulierenden Strömungsmittel durchströmt sind. Die Absaugeinrichtung gemäß diesen Ausführungsformen arbeitet daher nach dem Prinzip der Strahlpumpe und ist unmittelbar in den Strömungsmittelkreislauf integriert.

In den Ansprüchen 7 und 8 sind bevorzugte Anordnungen des Sammelraums für die zu entgasende Flüssigphase an-

0184691

gegeben. Je näher dieser Sammelraum zur Einlaßseite der Arbeitsmaschine liegt, desto effektiver und schneller kann mit Hilfe der Absaugeinrichtung nach der Erfindung der Gasanteil reduziert werden, da die von der Absaugeinrichtung erzeugte Druckdifferenz auch vom Druck im Sammelraum für die zu entgasende Flüssigphase abhängig ist, wobei dieser Druck bedingt durch die Leitungsverluste und die Verluste von im Kreislauf angeordneten Einrichtungen niedriger wird, je näher der Sammelraum an der Einlaßseite der Arbeitsmaschine angeordnet ist. Eine konstruktiv äußerst einfache Lösung ist im Anspruch 8 angegeben, da man bei dieser Weiterbildung den Sammelraum für die Flüssigphase im Fluidabscheider auch gleichzeitig als Sammelraum für die zu entgasende Flüssigphase nutzen kann, ohne daß man einen gesonderten Sammelraum für die zu entgasende Flüssigphase ausbilden und anordnen muß.

In den Ansprüchen 9 bis 11 sind bevorzugte Auslegungen des Sammelraums für die zu entgasende Flüssigphase im Bereich des Sammelraums für die Flüssigphase im Fluidabscheider angegeben. Zweckmäßigerweise wird nach den Ansprüchen 10 bis 11 ein an einem Ende offener Behälter im Sammelraum für die Flüssigphase des Fluidabscheiders zur Bildung des Sammelraums für die zu entgasende Flüssigphase derart angeordnet, daß er in die Flüssigkeit im Sammelraum eintaucht, und zwar zweckmäßigerweise etwa bis zur halben Höhe des Flüssigkeitsspiegels im Sammelraum. Ferner ist der Behälter derart ausgelegt, daß sich oberhalb des Flüssigkeitsspiegels im in die Flüssigphase im Sammelraum eingetauchten Behälter ein Gasraum bildet, der mit der Absaugeinrichtung in Verbindung steht, so daß die Gase aus diesem Gasraum durch die von der Absaugeinrichtung erzeugte Druckdifferenz beschleunigt abgeleitet werden können und die Flüssigkeit im Sammelraum möglichst effizient entgast wird.

Gemäß den Ansprüchen 12 und 13 kann der Behälter glockenförmig oder hohlzylindrisch ausgebildet sein.

Um möglichst wenige Zusatzeinrichtungen im Kreislaufsystem einer solchen Druckgasanlage zu haben, werden gemäß Anspruch 14 vorzugsweise sowohl der Sammelraum für die zu entgasende Flüssigphase als auch die Absaugeinrichtung im Fluidabscheider angeordnet, wodurch auch erreicht wird, daß man für die Verbindung von Absaugeinrichtungen zu dem Sammelraum für die zu entgasende Flüssigphase möglichst kurze Leitungsabschnitte hat, um die durch Leitungen bedingte Leitungsverluste möglichst gering zu halten.

In Abhängigkeit von den jeweiligen Gegebenheiten, insbesondere bei einer solchen Druckgasanlage kann jedoch auch die Anordnung nach Anspruch 15 zweckmäßig sein, bei der der Sammelraum für die zu entgasende Flüssigphase im Fluidabscheider insbesondere unter Ausnutzung des im Fluidabscheider ohnedies vorhandenen Sammelraums für die Flüssigkeitphase, angeordnet ist, während die Absaugeinrichtung dem Fluidabscheider vorgeschaltet ist, um für das Arbeiten der Absaugeinrichtung möglichst wenig Leitungsverluste zu haben.

Alternativ kann jedoch der Sammelraum für die zu entgasende Flüssigkeit auch im Flüssigkeitskreislauf des Fluidabscheiders dem Fluidabscheider nachgeschaltet sein, während dann die Absaugeinrichtung entweder im Fluidabscheider oder außerhalb desselben angeordnet sein kann. Unter Berücksichtigung der jeweils konkreten Gegebenheiten läßt sich daher der Gedanke nach der Erfindung, die Entgasung der Flüssigphase zu beschleunigen, nahezu frei wählbar im Kreislauf, insbesondere einer solchen Druckgasanlage, verwirklichen.

Wenn der Sammelraum für die zu entgasende Flüssigphase im Kreislauf dem Fluidabscheider nachgeschaltet ist, so wird dieser zweckmäßigerweise nach Anspruch 10 von einem Mantel begrenzt, der um die Verbindungsleitung zwischen dem Auslaß für die Flüssigphase des Fluidabscheiders und dem Einlaß der Arbeitsmaschine angeordnet ist.

Bei der Auslegung nach Anspruch 18 ist auch eine solche Anordnung von Absaugeinrichtung und Sammelraum für die zu entgasende Flüssigphase angegeben, bei der beide Einrichtungen außerhalb des Fluidabscheiders im Kreislauf angeordnet sind.

Der Stand der Technik sowie die Erfindung werden nachstehend an Beispielen unter Bezugnahme auf die beigefügte Zeichnung näher erläutert, wobei als Anwendungsbeispiel eines Fluidabscheiders ein Öl/Luft-Abscheider für eine Druckgasanlage gewählt ist, ohne daß jedoch die Erfindung auf dieses spezielle Anwendungsgebiet einer Druckgasanlage beschränkt ist. In der Zeichnung zeigt:

| Fig. 1 | ein Blockdiagramm einer Druckgasanlage mit einem Abscheidersystem, |
|---|---|
| Fig. 2 | eine Längsschnittansicht eines Fluidabscheiders einer üblichen Bauform zur Verdeutlichung des Standes der Technik, |
| Fig. 3 | eine Schnittansicht einer Entgasungsvorrichtung nach der Erfindung, |
| Fig. 4 | eine vergrößerte Ausschnittsansicht des im Fluidabscheider gebildeten Sammelraums für die zu entgasende Flüssigphase, |

Fig. 5　　　　　eine Ausschnittsansicht der Vorrichtung
　　　　　　　　　nach Fig. 3 zur Verdeutlichung einer
　　　　　　　　　bevorzugten Ausführungsform einer Absaugeinrichtung,

Fig. 6　　　　　eine schematische Schnittansicht einer
　　　　　　　　　Ausführungsvariante der Vorrichtung nach
　　　　　　　　　der Erfindung mit einer alternativen Ausführungsform eines Sammelraums für die
　　　　　　　　　zu entgasende Flüssigphase,

Fig. 7　　　　　eine schematische Ansicht einer Ausführungsvariante der Vorrichtung nach der
　　　　　　　　　Erfindung, und

Fig. 8　　　　　eine schematische Ansicht einer weiteren
　　　　　　　　　Ausführungsvariante der Vorrichtung nach
　　　　　　　　　der Erfindung.

In den Figuren der Zeichnung sind gleiche oder ähnliche
Teile jeweils mit denselben Bezugszeichen versehen.

Unter Bezugnahme auf Figur 1 ist schematisch eine Druckgasanlage als Anwendungsbeispiel gezeigt. Bei dieser
Druckgasanlage wird über einen Filter 1 und einen Ansaugregler 2 als Gas Luft angesaugt und in einen Kompressor
3, wie einen Schraubenkompressor, eingeleitet. Im Kompressor 3 wird die Luft verdichtet, wobei zur Schmierung,
Dichtung und Kühlung sowie zur Dämpfung des Kompressors
3 als Flüssigkeit Öl zugeleitet wird, die sich nebelartig mit der komprimierten Luft im Kompressor 3 vermischt.
Der so im Kompressor 3 komprimierte Fluidstrom, der Öl
und Luft enthält, wird einem insgesamt mit 4 bezeichneten
Abscheidersystem zugeleitet, in dem das Öl als Flüssigkeit von dem Fluidstrom so weit wie möglich getrennt
wird. Das hierbei abgeschiedene Öl wird vom Flüssigkeits-

sammelraum des Abscheidersystems 4 in Form eines Kreislaufs zum Kompressor 3, gegebenenfalls unter Zwischenschaltung einer Kühleinrichtung, zurückgeführt. Das gereinigte und weitgehend von Öl befreite Gas, d.h. die Luft, wird aus dem Abscheidersystem 4 abgezogen und über ein Minimum-Druckhalte- und Rückschlagventil 5 zum Verbraucher geleitet.

Als Beispiel für ein Abscheidersystem 4 ist in Figur 2 ein üblicher Fluidabscheider gezeigt, der insgesamt mit 6 bezeichnet ist. Wie mit einem Pfeil dargestellt ist, tritt der aus einem Luft/Öl-Gemisch bestehende Fluidstrom, der vom Kompressor 3 nach Figur 1 kommt, über einen Fluideinlaß 7 in den Fluidabscheider 6 ein und wird auf eine horizontal im Fluidabscheider 6 angeordnete Prallplatte 8 gerichtet, die eine Grobabscheideeinrichtung 9 bildet. Die Prallplatte 8 ist im Fluidabscheider 6 etwa mittig angeordnet und an der Oberseite derselben ist eine Feinabscheideeinrichtung 10 vorgesehen, die zweckmäßigerweise von einer zylindermantelförmigen Feinabscheiderpatrone 11 gebildet wird, die einen hohlen Innenraum 12 enthält, der von einem Mantel 13 umgeben ist, der beispielsweise ein Vlies oder dergleichen ist. Ebenfalls etwa mittig ist an der Oberseite des Fluidabscheiders 6 ein Gasauslaß 14 vorgesehen, über den als Gas die im Fluidabscheider 6 behandelte Luft zu einem nachgeschalteten und nicht näher dargestellten Verbraucher austritt. Dieser Gasauslaß 14 ist in Verbindung mit dem Innenraum 12 der Feinabscheideeinrichtung 10. Im Bereich des Bodens des Fluidabscheiders 6 wird ein Flüssigkeitssammelraum 15 gebildet, in dem sich die separierte Flüssigphase, wie das Öl, sammelt, das über einen Flüssigkeitsauslaß 16 abgesaugt wird und im Kreislauf entsprechend Figur 1 zum Kompressor 3 zurückgeführt wird. Mittels eines Deckels 17 ist der Fluidabscheider 6 druckdicht verschlossen.

In Figur 2 ist mit Pfeilen die Fluiddurchströmung durch den Fluidabscheider 6 angedeutet. Beim Auftreffen des Fluidstromes auf die Prallplatte 8 werden mitgerissene Flüssigkeitströpfchen, wie Öltröpfchen, abgeschieden und tropfen von der Unterseite der Prallplatte in den Flüssigkeitssammelraum 15. Die Fluidströmung, die die Grobabscheideeinrichtung 9 verläßt, wird durch die Prallplatte 8 in Richtung zur Wand des Fluidabscheiders 6 radial abgelenkt und steigt längs der Feinabscheideeinrichtung 10 nach oben und geht durch den aus Vlies beispielsweise bestehenden Mantel 13 der Feinabscheideeinrichtung 10 in den Innenraum 12 derselben. Die mittels der Feinabscheideeinrichtung 10 abgeschiedene Flüssigkeit tropft vom Außenrand der Prallplatte 8 in den Flüssigkeitssammelraum 15.

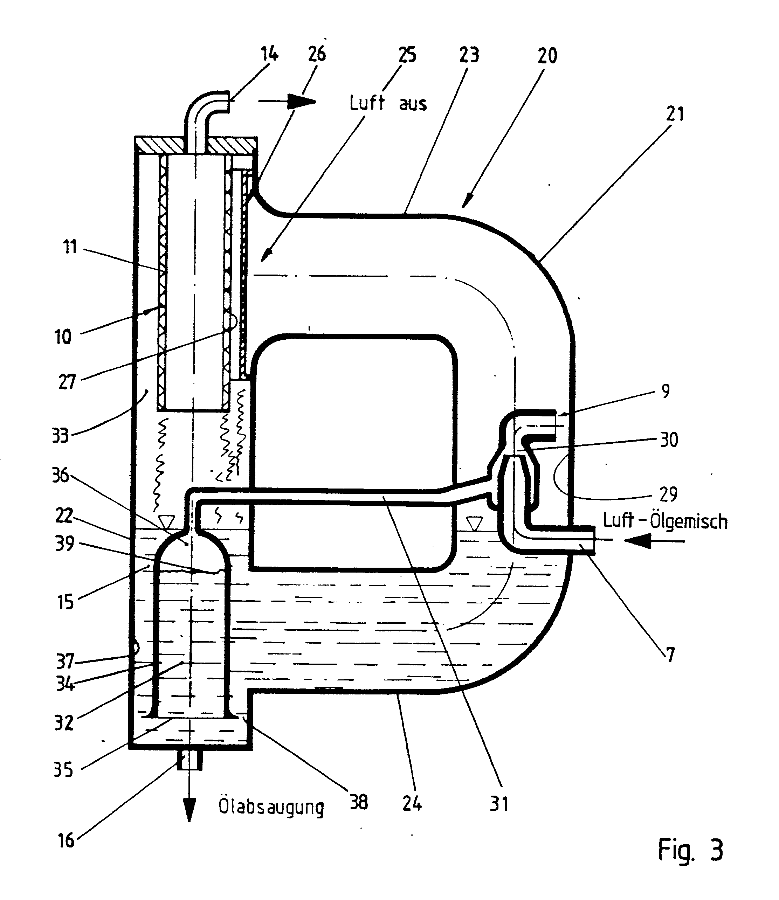

Anhand den Figuren 3 bis 5 wird eine erste Ausführungsform einer erfindungsgemäßen Vorrichtung zum Entgasen einer mittels eines insgesamt mit 20 bezeichneten Fluidabscheiders separierten Flüssigphase erläutert. Dieser Fluidabscheider 20 umfaßt einen ersten Hohlzylinder 21, in dem die Grobabscheideeinrichtung 9 angeordnet ist, und einen zweiten hierzu parallel nebeneinanderliegend angeordneten Hohlzylinder 22, der die Feinabscheideeinrichtung 10 in Form einer Feinabscheiderpatrone 11 enthält. Die oberen und unteren Enden der beiden Hohlzylinder 21, 22, die vorzugsweise von Rohrstücken gebildet werden, sind über Zwischenabschnitte 23, 24 in Form eines kommunizierenden Röhrensystems miteinander verbunden. Im Einmündungsbereich 25 des Zwischenabschnitts 23 ist eine Fluidleiteinrichtung 26 angeordnet, die in Fluidströmungsrichtung durch den Fluidabscheider 20 zwischen der Grobabscheideeinrichtung 9 und der Feinabscheideeinrichtung 10 liegt. Diese Fluidleiteinrichtung 26 ist in einem Abstand von der Außenfläche 27 der Feinabscheideeinrichtung 10 angeordnet. Die Fluidleiteinrichtung 26 ist derart angeordnet, daß der von der Grobabscheideeinrichtung 9 kommende Fluidstrom im ersten Hohlzylinder 21 aufsteigt und über den Zwischenabschnitt 23 auf die Fluidleiteinrichtung gerichtet wird, wobei durch das Auftreffen Flüssigkeit aus dem Fluidstrom abgetrennt wird, die von der Unterseite der Fluidleiteinrichtung 26 in den Flüssigkeitssammelraum 15 tropft. Gleichzeitig beschleunigt die Fluidleiteinrichtung 26 den Fluidstrom vor dem Erreichen der Feinabscheideeinrichtung 10 und sie lenkt den Fluidstrom von der abgeschiedenen Flüssigkeit weg.

Wie ferner aus Figur 3 zu ersehen ist, tropft durch die Feinabscheideeinrichtung 10 abgeschiedene Flüssigkeit von der Unterseite der Feinabscheideeinrichtung 10 in den Flüssigkeitssammelraum 15 ab. Die von der Grobabscheideeinrichtung 9 abgeschiedene Flüssigkeit strömt längs der Innenwand 29 des ersten Hohlzylinders 21 in den Flüssigkeitssammelraum 15. Die im Bereich der Fluidleiteinrichtung 26 abgeschiedene Flüssigkeit tropft vom unteren Rand und gegebenenfalls längs der Innenwand 37. des zweiten Hohlzylinders 22 in den Flüssigkeitssammelraum 15.

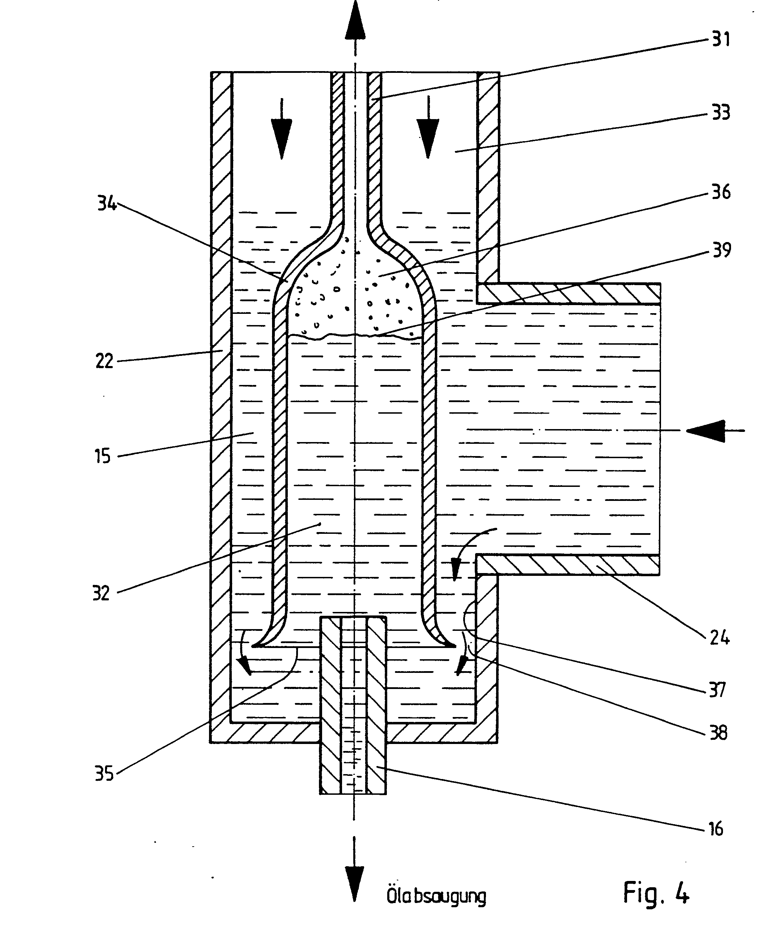

Nach Figur 3 umfaßt die Vorrichtung zum Entgasen einer mittels eines Fluidabscheiders separierten Flüssigphase eine insgesamt mit 30 bezeichnete Absaugeinrichtung, die bei dem dargestellten Beispiel im Bereich des Fluideinlasses 7 des Fluidabscheiders 20, und zwar vor der Grobabscheideeinrichtung 9, im ersten Hohlzylinder 21 angeordnet ist. Die Absaugeinrichtung 30 steht über eine Verbindungsleitung 31 mit einem Sammelraum 32 für die zu entgasende Flüssigphase in Verbindung. Der Sammelraum 32 ist im Flüssigkeitssammelraum 15 im Bodenbereich des zweiten Hohlzylinders 22 angeordnet. Wie in Figur 3 dargestellt ist, wird der Sammelraum 32 vom Gasraum 33 im Fluidabscheider 20 durch einen Behälter 34 abgetrennt, der bei der dargestellten bevorzugten Ausführungsform glockenförmig ausgebildet ist und ein offenes Ende 35 hat. Dieser Behälter 34 ist mit seinem offenen Ende 35 in die Flüssigkeit bzw. die Flüssigphase im Flüssigkeitssammelraum 15 vorzugsweise bis zur Hälfte des Flüssigkeitsspiegels im Flüssigkeitssammelraum 15 derart eingetaucht, daß im oberen Bereich des Behälters 34 oberhalb des Flüssigkeitsspiegels ein Gasraum 36 gebildet wird. Dieser Gasraum 36 ist über die Verbindungsleitung 31 mit der Absaugeinrichtung 30 verbunden. Aus Figur 4, in der der Bereich des Fluidabscheiders 20 nach Figur 3 näher dargestellt ist, in der der Sammelraum 32 für die zu entgasende Flüssigphase gebildet wird, ist gezeigt, daß der Rand des Behälters 34 im Bereich seines offenen Endes 35 nach außen erweitert ist und daß zwischen diesem Randbereich am offenen Ende 35 und der Innenwand 37 des zweiten Hohlzylinders 22 ein Zwischenraum 38 frei bleibt, so daß die Flüssigkeit im Flüssigkeitssammelraum 15 ungehindert in das Innere des Behälters 34 über sein offenes Ende 35 eintreten kann. Wie in Figur 4 ebenfalls dargestellt ist, ist der Flüssigkeitsauslaß 16 im Bodenbereich des Flüssigkeitssammelraums 15 derart hochgebogen, daß er wenigstens geringfügig in den Innenraum des Behälters 34 über sein offenes Ende 35 hineinragt, um zu gewährleisten, daß für die Absaugung von Flüssigkeit über den Flüssigkeitsauslaß 16 immer ein ausreichendes, entgastes Flüssigkeitsvolumen zur Verfügung steht. Der Flüssigkeitsspiegel im Innern des Behälters 34 ist mit 39 bezeichnet und er bildet eine Begrenzung des Gasraums 36 im oberen Bereich des Behälters 34.

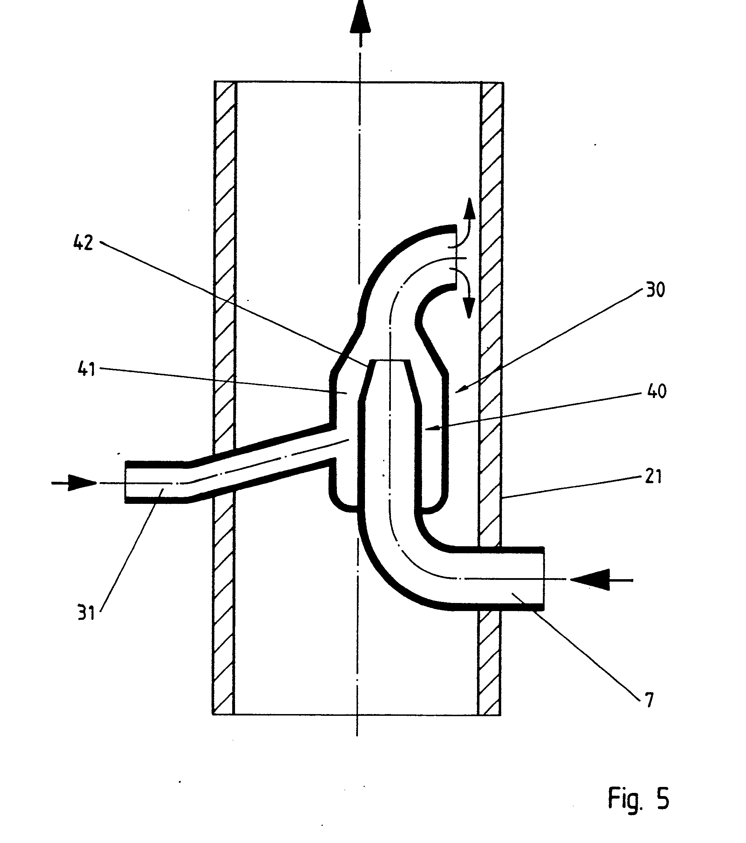

In Figur 5 ist detailliert die Absaugeinrichtung 30 von Figur 3 im Bereich des ersten Hohlzylinders 21 gezeigt. Als Absaugeinrichtung 30 zur Erzeugung einer Druckdifferenz wird hierbei ein Ejektor 40 verwendet, der nach dem Strahlpumpenprinzip arbeitet und die Fluidströmung vor dem Erreichen der Grobabscheideeinrichtung 9 beschleunigt, so daß in einem Raum 41 um einen Düsenabschnitt 42 des Ejektors 40 aufgrund einer Strömungsbeschleunigung ein Saugdruck erzeugt wird, der über die Verbindungsleitung 31 auch an dem Gasraum 36 des Sammelraums 32 für die zu entgasende Flüssigphase anliegt. Durch diesen Saugdruck, die die Absaugeinrichtung 30 durch die Beschleunigung des im Kreislauf zirkulierenden Strömungsmittels im Bereich des Ejektors 40 erzeugt, wird der Gasraum 36 im Sammelraum 32 für die zu entgasende Flüssigphase ständig abgesaugt, um die Entgasung der Flüssigphase hierdurch zu beschleunigen. Das aus dem Gasraum 36 abgesaugte Gas, sowie der in der Flüssigphase enthaltene Luftanteil, wird dann mit dem Fluidstrom nach dem Düsenabschnitt 42 des Ejektors 40 wiedervereinigt und dieser Fluidstrom gelangt dann zur Grobabscheideeinrichtung 9.

Bei dieser ersten Ausführungsform der erfindungsgemäßen Vorrichtung sind die Absaugeinrichtung 36 und der Sammelraum 32 für die zu entgasende Flüssigphase beide im Fluidabscheider 20 und dessen Teilen angeordnet. Die Absaugeinrichtung 30 wirkt über die Verbindungsleitung 31 mit dem Sammelraum 36 für die zu entgasende Flüssigphase derart zusammen, daß durch den von der Absaugeinrichtung 30 mittels des Ejektors 40 erzeugten Saugdruck das sich im Gasraum 36 angesammelte und aus der Flüssigphase beim Entgasen ausgetretene Gas beschleunigt von der Flüssigphase abgeführt wird. Hierdurch wird erreicht, daß sich der Gasanteil in der Flüssigphase beträchtlich reduzieren läßt, so daß die über den Flüssigkeitsauslaß 16 ausgeleitete Flüssigkeit einen wesentlich geringeren Gasanteil enthält und hierdurch ein verbesserter Wirkungsgrad an der Arbeitsmaschine mit dem Kompressor 3, eine effizientere Kühlung desselben sowie eine günstigere Schmierung und eine verbesserte Geräuschdämpfung desselben erzielt werden. Auch läßt sich der Gesamtwirkungsgrad einer solchen Druckgasanlage hierdurch verbessern und insgesamt wird gewährleistet, daß der Wirkungsgrad der Druckgasanlage nicht durch den Gasanteil in der im Kreislauf geführten Flüssigkeit beeinträchtigt wird.

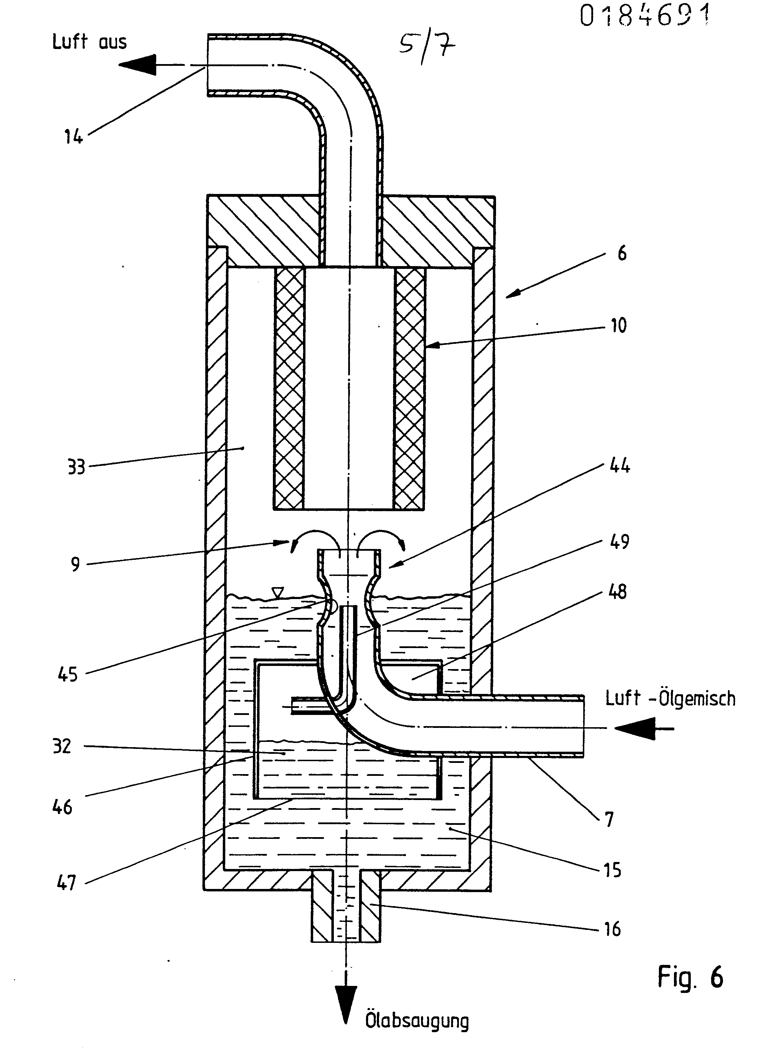

In Figur 6 ist eine abgewandelte Ausführungsform der erfindungsgemäßen Vorrichtung unter Anwendung auf den in Figur 2 gezeigten üblichen Fluidabscheider gezeigt. Selbstverständlich läßt sich diese Ausführungsform auch auf den Fluidabscheider nach Figur 3 anwenden.

Bei dieser Ausführungsform wird die Absaugeinrichtung 44 von einem Venturiabschnitt 45 im Fluideinlaß 7 unmittelbar vor der Grobabscheideeinrichtung 9 gebildet. Durch diesen Venturiabschnitt 45 wird die Fluidströmung beschleunigt und es wird ein Saugdruck im Bereich vor der Verengung des Venturiabschnitts 45 erzeugt. Wie gezeigt ist im Flüssigkeitssammelraum 15 des Fluidabscheiders ein Behälter 46 angeordnet, der bei dieser Ausführungsform als Hohlzylinder ausgebildet ist und ein offenes Ende 47 hat, das in die Flüssigkeit im Flüssigkeitssammelraum 15 eingetaucht ist, so daß im oberen Bereich des Behälters 46 ein Gasraum 48 gebildet wird. Der Sammelraum 32 für die zu entgasende Flüssigphase wird bei diesem Ausführungsbeispiel durch den Behälter 46 begrenzt und er ist vom Gasraum 33 im Fluidabscheider getrennt. Zur Verbindung des Gasraums 48 im Behälter 46 mit der Saugdruckseite des Venturiabschnitts 45 der Absaugeinrichtung 44 ist eine kurze Rohrleitung 49 vorgesehen, so daß aufgrund des erzeugten Saugdruckes das Gas im Gasraum 48 zur Verbesserung der Entgasung der Flüssigphase in den Fluidabscheider zurückgeführt wird.

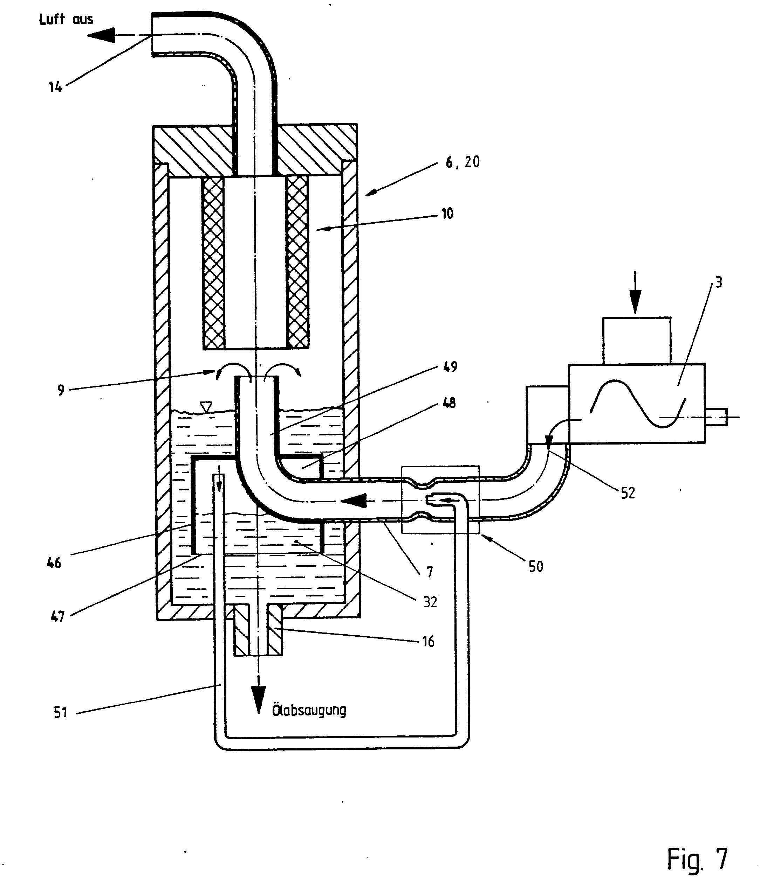

In Figur 7 ist schematisch eine Ausführungsvariante der erfindungsgemäßen Entgasungsvorrichtung gezeigt. Als wesentlicher Unterschied zu den vorhandenen Ausführungsformen ist bei dieser Ausführungsform nach Figur 7 eine Absaugeinrichtung 50, die einen Saugdruck erzeugt, außerhalb des Fluidabscheiders 6 bzw. 20, und zwar in Fluidströmungsrichtung, ausgehend vom Auslaß 52 des Kompressors 3 als Arbeitsmaschine gesehen vor dem Fluidabscheider 6 bzw. 20 angeordnet ist. Über eine schematisch dargestellte Verbindungsleitung 51 ist die Absaugeinrichtung 50 nach Figur 7 mit dem Sammelraum für die zu entgasende Flüssigphase verbunden, der entsprechend den Figuren 3 bis 6 im Fluidabscheider 6 bzw. 20 ausgebildet sein kann. Selbstverständlich kann die Absaugeinrichtung 50 ähnlich wie in den Figuren 5 oder 6 gezeigt, ausgebildet sein und einen Saugdruck unter Ausnutzung des im Kreislauf zirkulierenden Strömungsmittels erzeugen. Auch kann im Extremfall die Absaugeinrichtung 50 direkt in den Auslaß 52 des Kompressors 3 gelegt werden, da dort die Strömungsenergie des Strömungsmittels am höchsten ist und diese nicht durch Leitungsverluste vermindert ist.

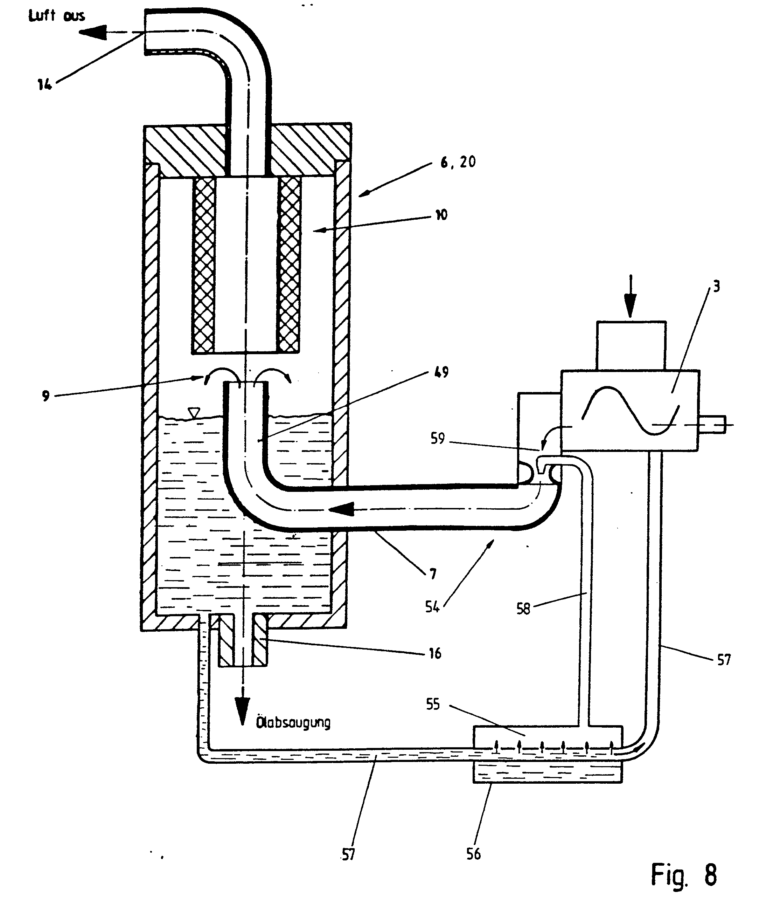

In Figur 8 ist schematisch eine weitere Ausführungsvariante einer Anordnung der erfindungsgemäßen Vorrichtung zum Entgasen einer mittels eines Fluidabscheiders separierten Flüssigphase gezeigt. In Abweichung von den vorangehenden Ausführungsbeispielen liegt bei dieser Ausführungsform sowohl die Absaugeinrichtung 54 als auch der Sammelraum 55 für die zu entgasende Flüssigphase außerhalb des schematisch in Figur 8 angedeuteten Fluidabscheiders 6 bzw. 20, der entsprechend den Figuren 2 oder 3 ausgebildet sein kann. Der Sammelraum 55 für die zu entgasende Flüssigphase wird hierbei von einem Mantel 56 gebildet, der um eine schematisch angedeutete Leitung 57 angeordnet ist, die vom Fluidabscheider 6 bzw. 20 zum Kompressor 3 als Arbeitsmaschine führt. Der Sammelraum 55 ist hierbei möglichst nahe der Öleinspritzstelle des Kompressors 3 angeordnet. Die Absaugeinrichtung 54 ist hingegen möglichst nahe am Auslaß 59 des Kompressors 3 als Arbeitsmaschine angeordnet und wie in Figur 8 dargestellt, ist die Absaugeinrichtung 54 sogar im Auslaß 59 des Kompressors 3 integriert. Über eine schematisch in Figur 8 gezeigte Verbindungsleitung 58 steht die Absaugeinrichtung 54 mit dem Sammelraum 55 für die zu entgasende Flüssigphase in Verbindung und es wird ähnlich wie bei den vorangehenden Ausführungsformen durch den von der Absaugeinrichtung 54 erzeugten Saugdruck das sich im Sammelraum 55 für die zu entgasende Flüssigphase ansammelnde Gas beschleunigt vor dem Eintritt der Flüssigphase in den Kompressor abgesaugt, so daß die im Fluidabscheider 6 bzw. 20 separierte Flüssigphase zwangsweise wirksam entgast werden kann. Die Absaugeinrichtung 54 kann wie bei den vorangehenden Beispielen entsprechend ausgebildet sein. Auch sind Kombinationen der Ausführungsformen nach den Fig. 7 und/oder 8 auch in Verbindung mit den Ausführungsformen nach den Figuren 3 bis 6 möglich, wobei die entsprechenden Kombinationen in Abhängigkeit von den Gegebenheiten einer Druckgasanlage so gewählt werden können, daß man auf die effizienteste Weise aus der zu entgasenden Flüssigphase soviel wie möglich Gas entfernen kann, um den Gasanteil vor dem Wiedereintritt in den Kompressor 3 als Arbeitsmaschine so stark wie möglich zu reduzieren.

Dr. D. Thomsen

W. Weinkauff

H. Hering

0184691

**PATENTANWÄLTE**

VERTRETER BEIM EUROPÄISCHEN PATENTAMT
EUROPEAN PATENT ATTORNEYS
MANDATAIRES EUROPEENS AGREES

Patentanwälte Dr. Thomsen · Weinkauff · Hering
P.O.Box 701929 · 8000 München

Telefon (0 89) 8 57 37 22     Telex 5 24 303 xpert d
                             8 57 37 99              cable: **xpertia**
Telecopier/facs. autom. GR III/II 0 89 / 8 57 37 24

**D-8000 München**     **Frankfurt/M.:**
**P.O.Box 701929**     Dipl.-Ing. W. Weinkauff
Dr. rer. nat. D. Thomsen
Dipl.-Ing. H. Hering

D-8033 Planegg (Kr. München) Bahnhofstraße 7

ROTORCOMP VERDICHTER GMBH

D-8000 München 70, Wolfratshauser Str.34

Vorrichtung zum Entgasen einer mittels eines Fluidabscheiders separierten Flüssigphase

Patentansprüche

1. Vorrichtung zum Entgasen einer mittels eines Fluidabscheiders separierten Flüssigphase in einem Kreislauf zwischen dem Fluidabscheider und einer Arbeitsmaschine, wie einem Verdichter, insbesondere für
eine Druckgasanlage, g e k e n n z e i c h n e t
durch eine Absaugeinrichtung (30, 44, 50, 54) im geschlossenen Kreislauf, die mit einem Sammelraum (32,
46, 55) für die zu entgasende Flüssigphase in Verbindung steht.

0184691

2. Vorrichtung nach Anspruch 1, dadurch g e k e n n - z e i c h n e t , daß die Absaugeinrichtung (30, 44, 50, 54) im Kreislauf möglichst nahe des Auslasses (52, 59) der Arbeitsmaschine (3) oder im Auslaß (52, 59) selbst angeordnet ist.

3. Vorrichtung nach Anspruch 1 oder 2, dadurch g e - k e n n z e i c h n e t , daß die Absaugeinrichtung (30, 44) im Bereich des Eintritts (7) des Fluidabscheiders (6, 20) angeordnet ist.

4. Vorrichtung nach Anspruch 3, dadurch g e k e n n - z e i c h n e t , daß die Absaugeinrichtung (30, 44) in Strömungsrichtung vor der Grobabscheideeinrichtung (9) im Fluidabscheider (6, 20) angeordnet ist.

5. Vorrichtung nach einem der vorangehenden Ansprüche, dadurch g e k e n n z e i c h n e t , daß die Ab- saugeinrichtung (30, 44, 50, 54) ein von im Kreislauf zirkulierenden Strömungsmittel durchströmter Ejektor (40) ist.

6. Vorrichtung nach einem der Ansprüche 1 bis 4, da- durch g e k e n n z e i c h n e t , daß die Absaug- einrichtung (30, 44, 50, 54) einen Venturiabschnitt (45) enthält.

7. Vorrichtung nach einem der vorangehenden Ansprüche, dadurch g e k e n n z e i c h n e t , daß der Sam- melraum (32, 46, 55) für die zu entgasende Flüssigphase möglichst nahe der Einlaßseite der Arbeitsmaschine (3) angeordnet ist.

8. Vorrichtung nach einem der vorangehenden Ansprüche, dadurch g e k e n n z e i c h n e t , daß der Sam- melraum (32) für die zu entgasende Flüssigphase von dem Sammelraum (15) für die Flüssigphase im Fluidabscheider (6, 20) gebildet wird.

9. Vorrichtung nach Anspruch 8, dadurch g e k e n n - z e i c h n e t , daß der Sammelraum (32) für die zu entgasende Flüssigphase vom Gasraum (33) im Fluidabscheider (6, 20) abgetrennt ist.

10. Vorrichtung nach Anspruch 9, dadurch g e k e n n - z e i c h n e t , daß zur Abtrennung des die Flüssigphase enthaltenden Sammelraums (32) im Fluidabscheider (6, 20) ein an einem Ende (35, 47) offener Behälter (34, 46) derart angeordnet ist, daß sein offenes Ende (35, 47) in die Flüssigphase eingetaucht ist und im Behälter (34, 46) oberhalb des Flüssigkeitsspiegels (39) ein Gasraum (36, 48) gebildet wird.

11. Vorrichtung nach Anspruch 10, dadurch g e k e n n - z e i c h n e t , daß der Gasraum (36, 48) mit der Absaugeinrichtung (30, 44) über eine Verbindungsleitung (31, 49) in Verbindung steht.

12. Vorrichtung nach Anspruch 10 oder 11, dadurch g e k e n n z e i c h n e t , daß der Behälter (34) glockenförmig ausgebildet ist.

13. Vorrichtung nach Anspruch 10 oder 11, dadurch g e k e n n z e i c h n e t , daß der Behälter (46) als Hohlzylinder ausgebildet ist.

14. Vorrichtung nach einem der vorangehenden Ansprüche, dadurch g e k e n n z e i c h n e t , daß der Sammelraum (32, 46) für die zu entgasende Flüssigphase und die Absaugeinrichtung (30, 44) im Fluidabscheider (6, 20) angeordnet sind.

15. Vorrichtung nach einem der Ansprüche 1 bis 13, dadurch g e k e n n z e i c h n e t , daß der Sammelraum (32, 46) für die zu entgasende Flüssigphase im Fluidabscheider (6, 20) angeordnet ist und die Absaugeinrichtung (50, 54) dem Fluidabscheider (6, 20) vorgeschaltet ist.

16. Vorrichtung nach einem der Ansprüche 1 bis 7, dadurch g e k e n n z e i c h n e t , daß der Sammelraum (55) für die zu entgasende Flüssigphase im Kreislauf dem Fluidabscheider (6, 20) nachgeschaltet ist.

17. Vorrichtung nach Anspruch 16, dadurch g e k e n n - z e i c h n e t , daß der Sammelraum (55) für die zu entgasende Flüssigphase von einem Mantel (56) um die Verbindungsleitung (58) zwischen dem Auslaß (16) für die Flüssigphase des Fluidabscheiders (6, 20) und dem Einlaß der Arbeitsmaschine (3) gebildet wird.

18. Vorrichtung nach Anspruch 16 oder 17, dadurch g e k e n n z e i c h n e t , daß die Absaugeinrichtung (30, 44, 50, 54) im Fluidabscheider (6, 20) oder diesem vorgeschaltet angeordnet ist.

1/7

0184691

Fig.1

Luft aus

Luft- Ölgemisch

Ölabsaugung

Fig. 2

Luft aus

Luft-Ölgemisch

Ölabsaugung

Fig. 3

Ölabsaugung

Fig. 4

4/7

Fig. 5

0184691

Luft aus

14

6

10

33

9

44

49

48

45

32

46

47

7

15

16

Luft -Ölgemisch

Ölabsaugung

Fig. 6

Luft aus

Ölabsaugung

Fig. 7

0184691

Luft aus

14

6, 20

10

9

49

59

7

54

58

57

16

55

Ölabsaugung

57

56

3

Fig. 8